# EUROPÄISCHE PATENTSCHRIFT

(11) **EP 2 576 913 B1**
(45) Veröffentlichungstag und Bekanntmachung des Hinweises auf die Patenterteilung: **29.06.2016**
(21) Anmeldenummer: 11725814.5
(22) Anmeldetag: 04.05.2011
(51) Int. Cl.: E01C 19/20, A01C 15/02

(54) **TRAGBARE STREUVORRICHTUNG ZUM AUSBRINGEN KÖRNIGER STOFFE**
PORTABLE SPREADER FOR SCATTERING GRANULAR MATERIALS
DISPOSITIF DISTRIBUTEUR PORTATIF DESTINÉ À ÉPANDRE DES MATIÈRES GRANULEUSES

(30) Priorität: 28.05.2010 CH 844102010
(43) Veröffentlichungstag der Anmeldung: 10.04.2013
(73) Patentinhaber: Birchmeier Sprühtechnik AG, 5608 Stetten (CH)
(72) Erfinder: ZWAHLEN, Jürg, CH-9495 Triesen (LI); BANDHAUER, Rolf, CH-5013 Niedergösgen (CH)
(74) Vertreter: Tompkin, Christine
(86) Internationale Anmeldenummer: PCT/IB2011/051974
(87) Internationale Veröffentlichungsnummer: WO 2011/148284

(56) Entgegenhaltungen:
- CH-A- 193 009
- US-A- 2 337 952
- US-A- 3 478 936

## Beschreibung

Die Erfindung betrifft eine tragbare Streuvorrichtung zur Aufbewahrung und zum Ausbringen von Granulat, insbesondere fliessfähigem Schüttgut auf einer Fläche, zum Beispiel von körnigem Düngemittel auf einer Rasenfläche, oder von Streugut auf glatten Fahr- oder Gehwegen gemäss dem Oberbegriff des Patentanspruchs 1.

Herkömmlicherweise werden körnige Düngemittel, Saatgut oder andere Schüttgüter in Kartons oder Beutel verpackt ausgeliefert. Der Anwender muss dann das Streugut mit der Hand oder einfachen Hilfsmitteln wie einer Schaufel auf dem Streugrund ausbringen. Dabei besteht vor allem das Problem, dass ein gleichmässiges Ausbringen praktisch nicht zu erreichen ist. Ausserdem birgt das Ausbringen von Chemikalien auf die genannte Art auch immer eine gewisse Verletzungsgefahr in sich, wenn diese Chemikalie ätzende oder giftige Stoffe enthält. Weitere Probleme ergeben sich aus der Schwierigkeit, angebrochene Kartons oder Beutel mit dem Schüttgut sicher und sauber zu lagern, und zum Beispiel vor Feuchtigkeit zu schützen.

Neben grösseren motorisch angetriebenen Vorrichtungen gibt es auch Handstreugeräte, mit deren Hilfe ein Ausstreuen von Schüttgut oder Chemikalien möglich ist. Das deutsche Gebrauchsmuster G 93 20 160.5 schlägt ein Streugerät zur Ausbringung von Streusalz, und ähnlichem, auf Bodenflächen vor, das sich durch die Anbringung eines Griffes an eine konventionelle Flasche auszeichnet. Der Anwender kann, nach der Idee dieses Gebrauchsmusters, Streugut aus der Flasche befördern, indem er diese an dem Griff hält und mit schnellen Bewegungen immer wieder um sich schleudert. Der Vorteil dieser Grifflasche ist, dass der Anwender nicht mit dem Schüttgut in Kontakt kommt. Ein gleichmässiges Streuen kann damit aber nur schwer erreicht werden.

Einen weiteren Lösungsvorschlag enthält die US Veröffentlichung US 3,997,119. Sie offenbart ein Gerät zum Ausbringen von körnigen Substanzen, das einen Behälter und ein daran angeschlossenes Ausgiessrohr sowie einen am Ende des Ausgussrohres angeordneten Verteiler umfasst. Der Verteiler weist eine weitgehend flache Platte auf, welche an der Oberseite mit Stiften versehen ist, die senkrecht zur Platte und über den Plattenbereich verteilt angeordnet sind. Mit dem Gerät kann Granulat verteilt werden, ohne dabei mit dem Material in Kontakt zu kommen. Der Nachteil des Gerätes liegt darin, dass der Benutzer den Behälter samt dem darin befindlichen Granulat beim Ausbringen hin und her schwenken muss, was relativ anstrengend und ermüdend ist. Ausserdem ist es mit dieser Vorrichtung schwierig, das Granulat gleichmässig zu verteilen.

Die Veröffentlichung WO-A-2008-043191 offenbart eine tragbare Streuvorrichtung zur Aufbewahrung und zum Ausbringen von Granulat. Sie beinhaltet einen Behälter und einen Verteiler zum Ausbringen des Granulats. Zwischen dem Behälter und dem Verteiler sind eine schlauchartige Verbindung und ein Durchflussregler angeordnet. An den Austrittsöffnungen des Verteilers ist je ein Rohrabschnitt derart angeordnet, dass die einzelnen Rohrabschnitte von der Austrittsöffnung weg divergent verlaufend angeordnet sind. Der Nachteil dieser Vorrichtung ist einerseits der Behälter, der schwierig zum Nachfüllen und unhandlich in der Handhabung ist. Andererseits kann es im Bereich der Durchflussregelung und im flexiblen Schlauchabschnitt der beschriebenen Streuvorrichtung je nach Korngrösse des Streugutes zu Verstopfungen kommen. Das heisst, dass diese Vorrichtung je nach Ausgestaltung des Durchflussreglers nur für bestimmte Korngrössen optimal verwendet werden kann.

In der US 3,478,936, die als nächtstliegender Stand der Technik gilt, ist eine Streuvorrichtung offenbart mit einer Ventilvorrichtung zur Dosierung des Streuguts. Das Ventil mit zwei Schliesselementen bewirkt eine Öffnung eines Durchgangs für das Streugut und eine kurz darauffolgende Schliessung desselben Durchgangs, um eine gegebene Menge fliessen zu lassen. Die Menge kann durch Drehen einer im Durchgang angeordneten Scheibe mit verschieden grossen Öffnungen variiert werden.

US 2,337,952 offenbart eine Streuvorrichtung mit einer Taschen-ähnlichen Behälter für Streugut, einem am Behälter anschliessenden Ausgussrohr und einer unmittelbar am Ende des Ausgussrohres angeordneten und in einem Verteiler integrierten Klappe. Die Vorrichtung ist bei einem im Wesentlichen vertikal ausgerichteten Ausgussrohr anzuwenden.

Der vorliegenden Erfindung liegt die Aufgabe zugrunde, eine tragbare Streuvorrichtung zu schaffen, welche die Nachteile bekannter tragbarer Vorrichtungen zum Ausbringen von Granulat beseitigt.

Diese Aufgabe wird durch die im Patentanspruch 1 beschriebene Vorrichtung gelöst.

Weitere Vorteile der Erfindung folgen aus den abhängigen Patentansprüchen und aus der nachfolgenden Beschreibung, in welcher die einzelnen Komponenten der Streuvorrichtung im Detail beschrieben und anhand eines in den schematischen Zeichnungen dargestellten beispielsweisen Ausführungsbeispiels näher erläutert wird.

Es zeigt:
- Fig. 1: eine schematische Darstellung der Vorrichtung zum Ausbringen von der Seite gesehen;
- Fig. 2: eine schematische Darstellung des Handteils Vorrichtung zum Ausbringen von Granulat in einer Schrägansicht;
- Fig. 3: eine schematische Darstellung des Behälters;
- Fig. 4: eine schematische Schnittdarstellung der Schleusenkammer im Handteil;
- Fig. 5: eine schematische Darstellung des Unterteils des Verteilers.
- Fig. 6: den Verschluss des sackähnlichen Behälters;

In den Figuren sind für dieselben Elemente jeweils dieselben Bezugszeichen verwendet worden und erstmalige Erklärungen betreffen alle Figuren, wenn nicht ausdrücklich anders erwähnt.

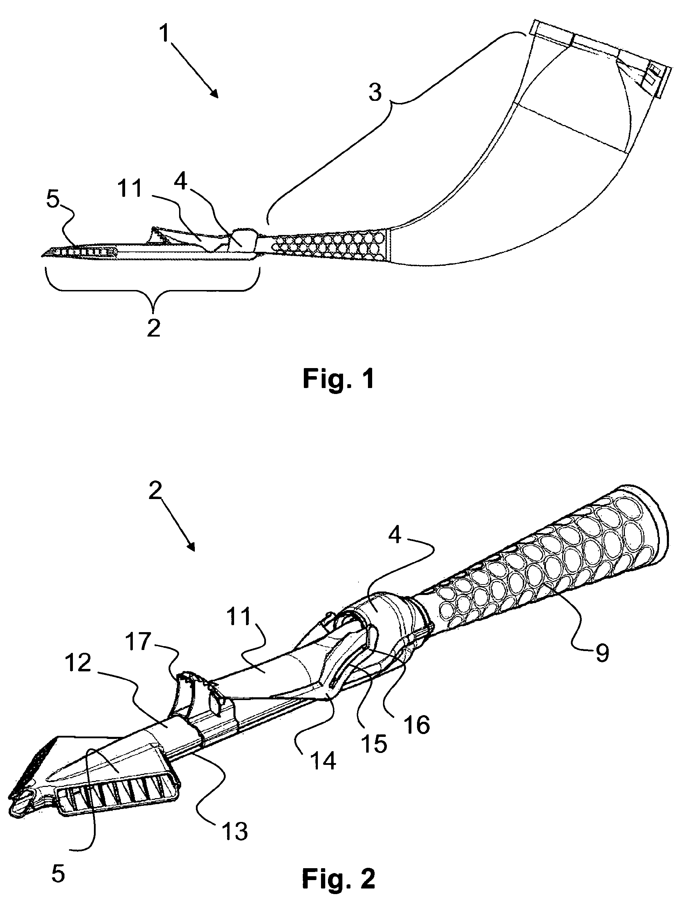

In der Figur 1 ist eine beispielsweise Ausführung der erfindungsgemässen tragbaren Streuvorrichtung 1 zur Aufbewahrung und zum Ausbringen von Granulat von der Seite gesehen schematisch dargestellt. Unter Granulat ist jegliches Schütt- oder Streugut zu verstehen, das riesel- bzw. fliessfähig ist. Um das Streugut gleichmässig ausbringen zu können bedarf es nicht nur der Handfertigkeit der Person, welche die Vorrichtung bedient, sondern die einzelnen Komponenten der Streuvorrichtung 1 müssen auch so aufeinander abgestimmt sein, dass ein gleichmässiges Ausbringen des Streugutes möglich ist. Unter dem gleichmässigen Ausbringen des Streugutes ist gemeint, dass das Streubild am Streugrund eine ausgeglichene Verteilung des Streugutes aufweist. Die Streuvorrichtung 1 besteht im Wesentlichen aus zwei Teilen, nämlich einem Handteil 2 und einem Behälter 3. Der verschliessbare Behälter 3 dient der Aufnahme des Streuguts und ein an dem Behälter 3 angeschlossenes Handteil 2 erlaubt das Ausbringen des Granulats. Im Handteil 2 ist unmittelbar nach dem Anschlussbereich des Behälters 3 an das Handteil 2 eine Schleusenkammer 4 mit einem Ventil, das über einen Hebel 11 betätigbar ist, angeordnet. Das Ventil dient der Regulierung des Durchflusses. Das andere Ende des Handteils 2 ist zu einem Verteiler 5 für das Streugut ausgeformt. Beim Ausbringen des Streugutes trägt der Benutzer den Behälter 3 der Streuvorrichtung mit einem am oberen Rand des Behälters 3 angeordneten Gurt wie eine Umhängetasche unter einem Arm bzw. schräg über den Rücken und hält den Gurt mit einer Hand. Der Gurt bildet eine Schlaufe, die der Benutzer mehr oder weniger mit der einen Hand über seine Schulter ziehen kann. Mit der anderen Hand wird das Handstück 2 gehalten. Dabei verläuft die Längsachse des Handteils 2 vom Behälter 3 weg leicht nach unten in Richtung Streugrund, so dass das Streugut aufgrund der Schwerkraft vom Behälter 3 in Richtung zur Schleusenkammer 4 im Handteil 2 und bei geöffnetem Ventil in den Verteiler 5 fliesst bzw. rieselt. Durch gleichmässige horizontale, schleuderartige Bewegungen mit dem Handteil wird das Granulat aus dem Verteiler 5 geschleudert und so gleichmässig am Streugrund aufgebracht. Möchte der Benutzer das Handteil 2 näher zum Streugrund halten, um gezielt an einem bestimmten Ort wenig Streugut auszubringen, so kann er die Hand, welche die Schlaufe hält, etwas hochheben und mit der anderen Hand das Handteil 2 in Richtung Streugrund ziehen. Soll im Gegenteil das Handteil näher am Körper geführt werden, so zieht der Benutzer den Sack 6 mittels der Schlaufe 8 hoch. Auf diese Art kann der Anwender jeweils die für ihn bzw. für die Anwendung optimale Position des Handgerätes erreichen. Das Ausbringen des Granulats erfolgt ohne grössere Anstrengung, da der Behälter samt Inhalt mit dem Schultergurt getragen wird und mit der Hand nur das Handteil 2 zu halten ist.

Die Figur 2 zeigt in einer schematischen Darstellung das Handteil 2. Das Handteil 2 ist aus einem Oberteil 12 und einem Unterteil 13 zusammengesetzt und weist eine Länge von etwa 25 cm auf, kann aber auch länger ausgestaltet sein und hängt von der beabsichtigten Wurfweite für das auszubringende Streugut ab. Die beiden Teile 12,13 werden über eine Art Nut- und Federverbindung zusammengehalten. Das vordere Ende des Handteils 2 ist zum Verteiler 5 ausgeformt. Das hintere Ende des Handteils 2, in welches ein als Gelenktrichter 9 bezeichnetes Übergangsstück des Behälters 3 mündet, ist zur Schleusenkammer 4 ausgeformt. Am Oberteil 12 ist der Hebel 11 schwenkbar gehalten. Hierfür sind beidseitig bogenförmige Schienen 15 angeformt, die der Führung des Hebels 11 dienen. Der Hebel 11 weist beidseitig je ein angeformtes Formteil 14 mit einem bogenförmigen Schlitz 16 auf in welchen die Schiene 15 eingreift. Weiter ist am Handteil 2 ein Stellregler 17 vorgesehen, der eine reproduzierbare Einstellposition des Hebels 11 ermöglicht.

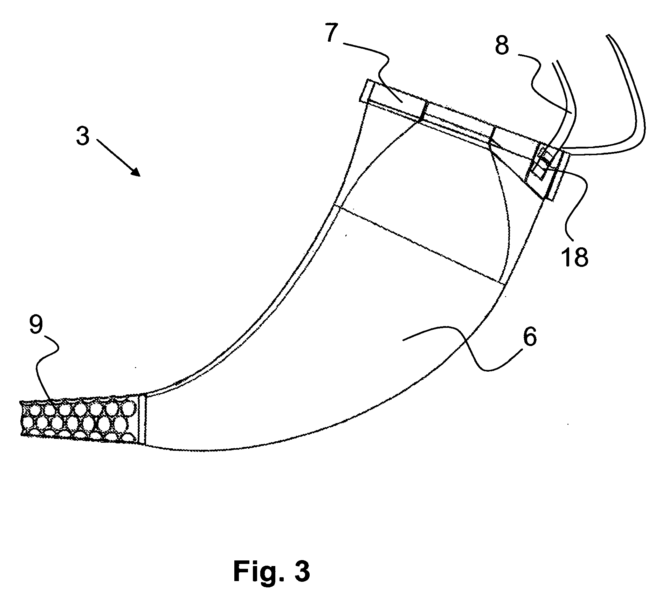

In der Figur 3 ist der Behälter 3 schematisch dargestellt. In der beschriebenen Ausführungsform besteht er aus einem hornförmigen, aus Kunstsoff-Folie hergestellten Sack 6, an dessen oberen Ende ein Verschluss 7 angeordnet ist, mit dem der Sack 6 bzw. der Behälter 3 rieseldicht verschliessbar ist. Der Sack 6 weist je nach Anwendungsbereich ein Fassungsvermögen von etwa 3 I bis 7 I auf, ist jedoch vorteilsweise aus ergonomischen Gründen auf etwa 5 I ausgelegt. Am Verschluss 7 ist eine Gurtenhalterung 18 zur Befestigung eines Tragegurts 8, der in der Zeichnung nur angedeutet ist, vorgesehen. Das untere Ende des Sackes 6 ist mit dem Gelenktrichter 9 verbunden wie beispielsweise verschweisst, verklebt, geklemmt oder dergleichen. Der Gelenktrichter 9 besteht aus einem konisch geformten, flexiblen und formstabilen Schlauchabschnitt aus Kunststoff und hat die Aufgabe, bei einer Längsbelastung keine radiale Längenänderung zu erlauben. Diese Eigenschaften werden erreicht, indem der Mantel des Gelenktrichters 9 strukturiert ist, und beispielsweise unterschiedliche Dicken aufweist. Die Länge des Gelenktrichters 9 beträgt etwa 24 cm, kann jedoch auch um einige cm länger oder kürzer sein und hängt von der Form und vom Volumen des Sackes 6 ab.

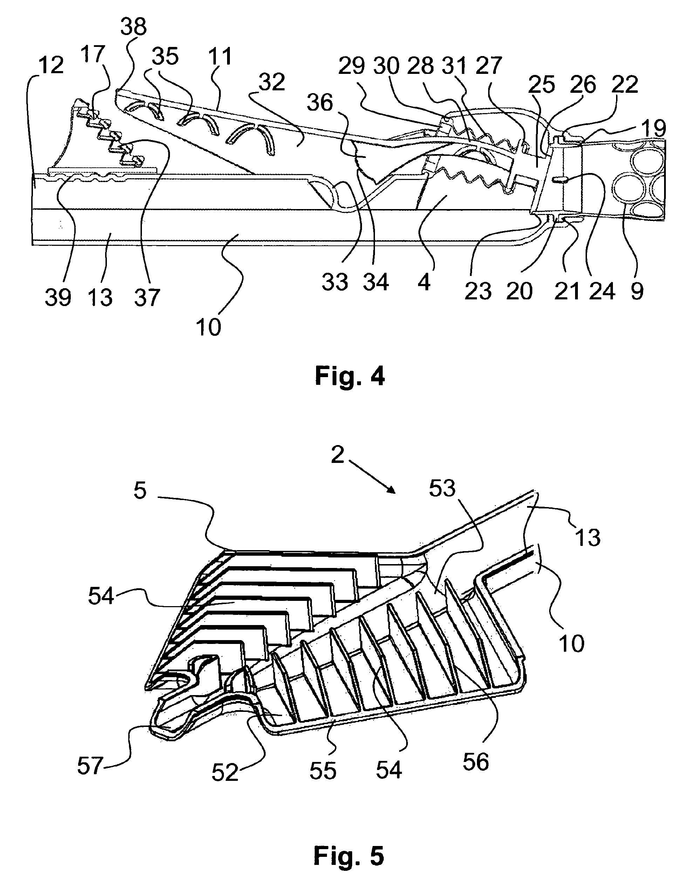

Die Figur 4 zeigt eine schematische Schnittdarstellung des Handteils 2 im Bereich der Schleusenkammer 4. Im Gelenktrichter 9 des Behälters 3 ist eine Hülse 19 eingesetzt. Der Aussendurchmesser der Hülse 19 beträgt in der beispielsweisen Ausführung etwa 2.5 cm. Die Hülse 19 weist in ihrem Mittelbereich einen um den äusseren Umfang laufenden Kragen 20 auf. Das Ende des Gelenktrichters 9 weist ebenfalls einen Kragen 21 auf. Die Hülse 19 ist soweit in den Gelenktrichter 9 eingeschoben, dass der Kragen 20 der Hülse 19 am Kragen 21 des Gelenktrichters 9 anliegt und diese beiden Krägen 20,21 miteinander eine flanschartige Verbindung zwischen dem Gelenktrichter 9 und der Hülse 19 bilden. Im Anschlussbereich des Handteils 2 ist eine innen verlaufende Ringnut 22 vorgesehen, in welche der Kragen 20 des Gelenktrichters 9 und der Kragen 21 der Hülse 19 eingesetzt sind. Damit ist der Behälter 3 mit dem Handteil 2 formschlüssig verbunden. Anstelle dieser Flanschverbindung ist auch eine lösbare Verbindung, wie beispielsweise in der Art eines schraubbaren Schlauchanschlusses denkbar. Die zylinderförmige Hülse 19 ist an dem im Handteil 2 befindlichem Ende abgeschrägt. Der schräg verlaufende Rand der Hülse 20 bildet einen Ventilsitz 23 für den Ventilteller 26. Das Handteil 2 ist im Wesentlichen rohrförmig ausgebildet und im hinteren Ende, in welches der Gelenktrichter 9 des Behälters 3 mündet und das zur Schleusenkammer 4 ausgeformt ist, ist das Ventil 25 angeordnet. Der Hebel 11, der wie in Figur 2 gezeigt, aussen am Oberteil 12 des Handteils 2 in einer Schiene geführt ist, mündet mit einer Verlängerung, der Ventilstange 28, in einer Öffnung 29 der Schleusenkammer 4 des Handteils 2. Am Ende der Ventilstange 28 ist ein erster Kragen 27 angeordnet und den Abschluss der Ventilstange 28 bildet der Ventilteller 26, der bei geschlossenem Ventil 25 auf dem Rand 23 der Hülse 19 aufliegt. Somit ist in der gezeigten Ausführungsform der Hebel 11 mit der Ventilstange 28 und dem Ventilteller 26 ein einstückiges Formteil 32 das an seiner dem Oberteil 12 des Handteils 2 zugewandten Seite abschnittsweise Verstärkungsrippen 35 aufweist. Der Hebel 11, die Ventilstange und der Ventilteller können aber auch Einzelteile sein, welche über entsprechende Gelenke miteinander wirkverbunden sind. Die Ventilstange 28 ist von einem Gummibalg 31 umgeben, dessen eines Ende über den Rand 30 der Öffnung 29 der Schleusenkammer 4 und das zweite Ende über den ersten Kragen 27 der Ventilstange 28 gestülpt ist. Dadurch ist der Innenraum der Schleusenkammer 4 dicht gegen aussen abgeschlossen. Wird nun der Hebel 11 in Richtung Handteil 2 gedrückt, so gleitet der Hebel 11, geführt von den aussen am Oberteil 12 angeordneten Schienen längs eines Kreisbogens. Dabei wird der Ventilteller 26 vom Rand der Hülse 19 - dem Ventilsitz 23 - abgehoben und das Ventil 25 geöffnet. Die Schräge des Ventilsitzes 23 gegenüber der Längsachse der Hülse 19 beträgt etwa 15°, kann aber auch 5° bis 10° grösser oder kleiner sein. Beim Betätigen der Vorrichtung 1 wird das Handteil 2 so gehalten, dass die Längsachse des Handteils 2 mit einem Winkel von etwa 15° gegenüber der Horizontalen gegen den Boden bzw. Streugrund weist. In dieser Position liegt die Ebene des Ventilsitzes in der Vertikalen. Um ein gleichmässiges Zulaufen des Streugutes zum Ventil 25 zu erreichen, ist in der Hülse 19 eine Schikane vorgesehen. Die Schikane wird von einem in der Hülse 19 quer zur Längsachse und horizontal angeordneten Steg 24 gebildet. Beim Öffnen des Ventils 25 verläuft die Bewegungsrichtung des Ventiltellers 26 auf einer Kreisbahn und der Ventilteller 26 hebt ähnlich einer Kippbewegung, bei der die Schwenkachse weit ausserhalb der Schleusenkammer 4 liegt, vom Ventilsitz 23 ab. Dadurch ist die Öffnung des Ventils 25 im Bereich des Unterteils 13 geringfügig grösser als im Bereich des Oberteils 12 des Handteils 2. Durch die Erweiterung des Oberteils 12 im Bereich der Schleusenkammer 4, in welcher die Ventilstange 28 mit dem Balg 31 angeordnet, und dass weder eine Dichtung noch eine Achse oder ein bewegtes Teil in den Durchfluss des Streugutes ragt, kann das Streugut bei geöffnetem Ventil 25 ungehindert in die Schleusenkammer 4 und weiter in den rohrförmigen Abschnitt 10 fliessen. Der Hebel 11 wird von einer Feder, die in der Figur 4 nicht gezeichnet ist, weg vom Oberteil 12 gedrückt, so dass das Ventil 25 ohne Betätigung des Hebels 11 geschlossen ist. Die Feder ist zwischen dem Oberteil 12, an dem eine kugelsegmentförmige Ausbuchtung 33 angeformt ist, und den an der Innenseite des Hebels 11 in Längsrichtung angeordneten Verstärkungsrippen 36 eingespannt. Um eine reproduzierbare Öffnung des Ventils 25 einstellen zu können, ist an der Oberseite 12 des Handteils 2 ein Stellregler 17 vorgesehen. Der Stellregler 17 greift in Schienen ein, die in Längsrichtung am Handteil 2 angeordnet sind, und ist dadurch in Längsrichtung verschiebbar. Die dem Handgriff zugewandte Seite des Stellreglers 17 ist abgestuft. Je nach Position des Stellreglers 17 liegt die Vorderkante 38 des Hebels 11 auf einer der Stufen 37 des Stellreglers 17 auf. Zwischen dem Stellregler 17 und der Oberfläche des Oberteils 12 des Handteils 2 ist eine Rasterung 39 angeordnet, so dass beim Einrasten des Stellreglers 17 an einer bestimmten Rasterung beim Betätigen des Hebels 11 dessen Vorderkante 38 jeweils auf der gleichen Stufe 37 des Stellreglers 17 zu liegen kommt, was einer definierte Öffnung des Ventils ermöglicht. Wird der Stellregler in die hinterste Position geschoben, so liegt die Vorderkante 38 des Hebels 11 auf der obersten Stufe 37 auf. Die Höhe dieser Stufe ist so gewählt, dass das Ventil 25 geschlossen ist. Damit wirkt diese Position des Stellreglers 17 als Verriegelung des Ventils 25.

Der Vorderteil des Handteils 2 ist zu einem Verteiler 5 ausgeformt. In der Figur 5 ist in einer schematischen Darstellung des Unterteils 13 des Handteils 2 der Verteiler 5 gezeigt. Der mittlere Abschnitt 10 des Handteils 2 entspricht im Wesentlichen einem zylindrischen Rohrabschnitt, der im Verteiler 5 mündet. Der Verteiler 5 hat eine deltoidförmige Bodenplatte 52, die in Längsrichtung eine sich nach vorne hin verjüngende Vertiefung 53 aufweist. Diese Vertiefung 53 ist im Wesentlichen die Fortsetzung der rohrförmigen Ausgestaltung des Handteils 2, die in einem Ausguss 56 endet. Seitlich neben der Vertiefung 53 sind rechts und links senkrechte Rippen angeordnet, die unter einem Winkel von etwa 55° in Bezug auf die Längsachse des Handteils 2 nach vorne hin verlaufen. Dieser Winkel kann auch etwas grösser oder kleiner sein, sollte aber zwischen 45° und 65° liegen, um eine optimale Verteilung des Streugutes zu erreichen. Nach vorne hin sind die Rippen kürzer und reichen jeweils an der Bodenplatte 52 bis an deren Aussenkante 55. Das Oberteil 12 des Handteils 2 hat im Bereich des Verteilers die gleiche geometrische Form und bildet dort den Deckel des Verteilers 5. Die Aussenmasse sind jedoch kleiner als die der Bodenplatte. Die Rippen 54 reichen am Deckel bis zu dessen Aussenkante. Dadurch ergibt sich eine Abschrägung 56 der Rippen 54 an deren Aussenkanten. Das Ende 57 des Verteilers 5 ist zu einem Ausguss ausgeformt. In der vorzugsweisen Ausführung weist der Verteiler 5 rechts und links je sieben Rippen 54 auf. Die Anzahl ist jedoch nicht auf sieben beschränkt. Je nach Grösse des Verteilers kann die Anzahl grösser oder kleiner sein.

Beim Austragen von Streugut gelangt das Granulat über die Schleusenkammer 4 und über das Mittelstück 10 in den Verteiler 5. Durch die mit der Hand beim Ausbringen ausgeführte Schleuderbewegung wird das Granulat beschleunigt und trifft je nach Schleuderrichtung beim Durchfliessen im Verteiler 5 auf die Rippen 54 und wird von diesen abgelenkt und nach aussen geleitet bzw. geschleudert. Bei geringer Fliessgeschwindigkeit, wenn zum Beispiel das Handteil 2 ohne Schleuderbewegung nach unten gehalten wird, rieselt das Streugut nur aus dem Ausguss 57. Damit kann Dünger oder anders Streugut ganz gezielt und auch in kleinen Mengen ausgebracht werden.

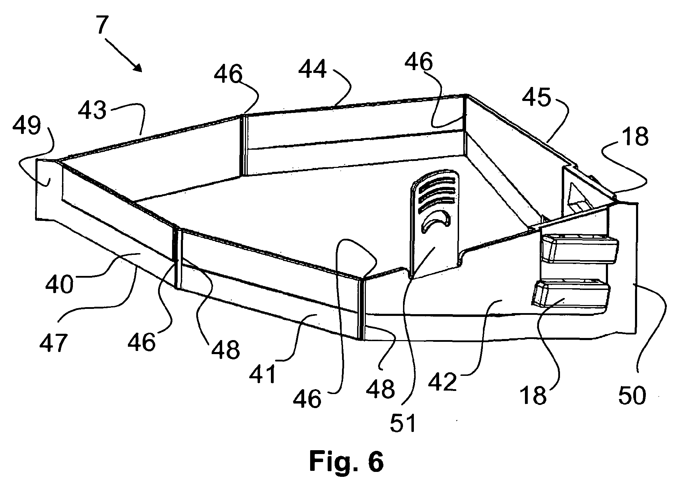

In der Figur 6 ist der Verschluss 7 des in der Figur 3 gezeigten Sackes 6 bzw. der Vorrichtung 1 gezeigt. Der Verschluss 7 besteht im Prinzip aus sechs leistenähnlichen Elementen (40-45) die an ihren Schmalseiten 48 miteinander verbunden sind. Die so miteinander verbundenen Elemente bilden ein Sechseck. Die unteren Ränder 47 der Elemente (40-45) sind mit dem Sack 6 fest verbunden, beispielsweise verschweisst oder verklebt. Durch Zusammenklappen der Elemente 40-45 entlang ihrer Schmalseiten 48 wird der obere Rand des Sackes 6 zusammengefaltet und kann mittels eine Klammer oder Lasche verschlossen werden. Um ein einfaches Öffnen und Schliessen und in gleicher Reihenfolge anlaufendes Zusammenklappen der Elemente 40-45 des Verschlusses zu erreichen sind zwei Elemente 40, 43 an der gemeinsamen Schmalseite 49 miteinander verschweisst. Ebenso sind deren gegenüberliegende Elemente 42, 45 an deren gemeinsamer Schmalseite 50 miteinander verbunden, beispielsweise verschweisst oder verklebt. Die anderen Elemente sind an den Schmalseiten 48 mittels Filmscharnieren 46 miteinander verbunden. Hält man nun zum Zusammenfalten den Verschluss 7 an den verschweissten Schmalseite 49, 50 und drückt die vorderen beiden Elemente 40, 43 zusammen, so kommen die beiden Innenseiten der ersten beiden Elemente 40, 43 aufeinander zu liegen, wobei die Schmalseiten der nachfolgenden Elemente 41, 44 ebenfalls aneinander liegen. Schiebt man nun die beiden ersten zusammenliegenden Elemente 40, 43 in Richtung Zentrum des Verschlusses 7, so legen sich die Aussenflächen der mittleren Elemente 41,43 an die Aussenflächen der ersten Elemente 40, 43 an und der Sack beginnt sich zu schliessen. Von oben gesehen bilden die Kanten der Elemente 42,45 ein grosses V in welche in der Öffnung ein W, das von den Elementen 44,43, und 40, 41eingeschlossen ist. Schiebt man die bereits teilweise gefalteten Elemente weiter in Richtung der dritten Elemente 42, 45, so legen sich schliesslich die Innenseiten der mittleren Elemente 41, 43 an die Innenseiten der dritten Elemente 42, 45 an und der Verschluss 7 ist zusammen gefaltet und der Sack verschlossen. Im gezeigten Ausführungsbeispiel weisen die Schmalseiten der dritten Elemente 42, 45 unterschiedliche Längen auf. Neben der Schweissnaht 50 ist an den Elementen 42, 45 eine Gurthalterung 18 angeordnet, die der Befestigung eines Tragegurtes dient. Weiter ist an einem der beiden dritten Elemente 42 eine Lasche 51 vorgesehen, mit der durch Einhängen in einer entsprechenden Laschenklemme am anderen dritten Element 45 der Verschluss 7 im zusammen gefalteten Zustand fixierbar ist. Zum Öffnen und Befüllen des Sackes wird die Lasche 51 aus der Laschenklemme gedrückt und an den beiden Schweissnähten 49, 50 gezogen. Dadurch klappen die Elemente 40-45 auseinander und der Sack ist geöffnet. In der Praxis sind die Elemente unterschiedlich lang. Deren Grösse richtet sich nach der Dicke der Elemente 40, 45, nach dem Material des Sackes und den Scharnieren. Die Filmscharniere 46 sind an der Verbindung der ersten Elemente 40, 43 mit den mittleren Elementen 41,44 aussen und an der Verbindung der mittleren Elemente 41,44 mit den dritten Elementen 42, 45 innen angeordnet. Der mit dem beschriebenen Verschluss 7 zusammengefaltete Sack ist rieseldicht verschlossen, das heisst, dass kein Granulat aus dem Sack fliesst, auch wenn dieser mit dem Verschluss nach unten gehalten wird. Für sehr feinkörniges Granulat wie beispielsweise Streusalz kann es von Vorteil sein, wenn an der oberkannte der Elemente 40-45 zusätzliche Dichtmittel angeordnet sind. Diese Dichtmittel können beispielsweise eine strukturierte Oberfläche der Elemente 40-45, dünne, aufgeklebte Streifen aus rauem Material oder eine leicht vorspringende Kante, die in eine Ausnehmung am anliegenden Element eingreift. Der Verschluss 7 kann aber aus sechs einzelnen Elemente 40-45, die an ihren Schmalseiten mittels einer scharnierartigen Verbindung zusammengehalten sind, aufgebaut sein. Es ist auch denkbar, dass ein einstückiges Formteil mit sechs Seitenwänden, welche die Elemente 40-45 bilden, hergestellt ist. Die scharnierartige Verbindung der Elemente 40-45 ergibt sich dann aus Dünnstellen zwischen den einzelnen Abschnitten.

Mit der beschriebenen Streuvorrichtung kann körniges Material mit fast beliebiger Korngrösse ohne Probleme und ohne grossen Kraftaufwand gleichmässig ausgebracht werden. Der Anwender kommt dabei nur minimalst mit dem Streugut in Berührung. Die sehr handliche Vorrichtung erlaubt auch ein müheloses Ausbringen von beispielsweise Streusalz auf Strassen und Wegen sowie Dünger, Pflanzenschutzmittel und dergleichen in schwierigen Bereichen im Gelände wie Böden unter Sträuchern und Büschen oder Böschungen.

## Patentansprüche

1. Tragbare Streuvorrichtung zur Aufbewahrung und zum Ausbringen von Granulat, insbesondere riesel- und fliessfähigem, körnigem Schüttgut, welche einen verschliessbaren Behälter (3) und ein am Behälter (3) angeschlossenes Handteil (2) zum Ausbringen des Granulats beinhaltet, wobei aussen an dem Handteil (2) ein Hebel (11) schwenkbar gehalten ist, der über eine Ventilstange (28) mit einem Ventilteller (26) eines Ventils (25) verbunden ist und das Handteil (2) im Anschlussbereich des Behälters (3) eine Schleusenkammer (4) zur Regulierung des Durchflusses aufweist, und das Handteil (2) am vorderen Ende zu einem Verteiler (5) ausgeformt ist, wobei das Ventil (25) in der Schleusenkammer (4) angeordnet ist und über den Hebel (11) betätigbar ist, **dadurch gekennzeichnet, dass** die Verbindung zwischen dem Handteil (2) und dem Behälter (3) über eine formschlüssige Verbindung von einer im Handteil (2) eingesetzten zylindrischen Hülse (19) erfolgt, und dass die Hülse (19) an dem im Handteil (2) befindlichem Ende abgeschrägt ist, wobei der schräg verlaufende Rand der Hülse (20) einen Ventilsitz (23) bildet.

2. Streuvorrichtung nach Anspruch 1, **dadurch gekennzeichnet, dass** das Handteil (2) aus einem Oberteil (12) und einem Unterteil (13) zusammengesetzt ist, und dass die Verbindung der beiden Teile (12,13) über eine Nut und Feder Verbindung erfolgt.

3. Streuvorrichtung nach Anspruch 1 oder 2, **dadurch gekennzeichnet, dass** der Hebel (11) mit einer Verlängerung welche eine Ventilstange (28) bildet, in einer Öffnung (29) der Schleusenkammer (4) des Handteils (2) mündet und dass am Ende der Ventilstange (28) der Ventilteller (26) angeformt ist.

4. Streuvorrichtung nach Anspruch 3, **dadurch gekennzeichnet, dass** die Ventilstange (28) von einem Gummibalg (31) umschlossen ist, dessen eines Ende über den Rand (30) der Öffnung (29) der Schleusenkammer (4) und dessen zweites Ende über einen an der Ventilstange (28) angeordneten ersten Kragen (27) gestülpt ist.

5. Streuvorrichtung nach Anspruch 4, **dadurch gekennzeichnet, dass** am Oberteil (12) des Handteils (2) beidseitig bogenförmige Schienen (15) angeformt sind, die der Führung des Hebels (11) dienen, und dass der Hebel (11) beidseitig je ein angeformtes Formteil (14) mit einem bogenförmigen Schlitz (16) aufweist, in welchen die Schiene (15) eingreifen.

6. Streuvorrichtung nach Anspruch 5, **dadurch gekennzeichnet, dass** am Handteil (2) ein Stellregler (17) angeordnet ist, der eine reproduzierbare Einstellposition des Hebels (11) ermöglicht.

7. Streuvorrichtung nach Anspruch 1, **dadurch gekennzeichnet, dass** der Unterteil (13) des Handteils (2) im Bereich des Verteilers (5) zu einer deltoidförmigen Bodenplatte (52) ausgeformt ist, die in Längsrichtung eine sich nach vorne hin verjüngende Vertiefung (53) aufweist, und dass seitlich neben der Vertiefung (53) rechts und links senkrechte Rippen (54) angeordnet sind, die unter einem Winkel von etwa 55° +/- 10° in Bezug auf die Längsachse des Handteils (2) nach vorne hin verlaufen, und dass die Rippen (54) nach vorne hin kürzer sind und jeweils an die Aussenkante (55) der Bodenplatte (52) reichen.

8. Streuvorrichtung nach Anspruch 7, **dadurch gekennzeichnet, dass** das Oberteil (12) des Handteils (2) im Bereich des Verteilers (6) die gleiche geometrische Form wie die Bodenplatte (52) des Unterteils (13) aufweist und den Deckel des Verteilers (5) bildet.

9. Streuvorrichtung nach Anspruch 1, **dadurch gekennzeichnet, dass** der Behälter (3) von einem Sack (6) und einem konisch geformten, flexiblen und formstabilen Gelenktrichters (9) gebildet ist, wobei der Sack (6) ein Folien Sack ist, und dass weiter der Sack (6) mit dem Gelenktrichter (9) verbunden ist.

10. Streuvorrichtung nach Anspruch 1, **dadurch gekennzeichnet, dass** in der Hülse (19) quer zur Längsachse ein Steg (24) angeordnet ist, wobei der Steg (24) parallel zur Längserstreckung des Handteils (2) verläuft.

11. Streuvorrichtung nach Anspruch 8, **dadurch gekennzeichnet, dass** die Aussenmasse des Deckels des Verteilers (5) kleiner sind als die Aussenmasse der Bodenplatte (52) des Verteilers (5) und die Rippen (54) an ihren Aussenkanten Abschrägungen (56) aufweisen.

12. Streuvorrichtung nach Anspruch 5, **dadurch gekennzeichnet, dass** die Schräge des Ventilsitzes (20) gegenüber der Längsachse der Hülse (19) 15° +/- 10° beträgt und der Ventilteller (26) auf einer Kreisbahn bewegbar ist, deren Drehpunkt weit ausserhalb der Schleusenkammer (4) und ausserhalb des Ventiltellers (26) liegt.

13. Streuvorrichtung nach Anspruch 12, **dadurch gekennzeichnet, dass** der Hebel (11) so angeordnet ist, dass sein offenes und vom Ventilteller (26) entferntes Ende zum Verteiler (5) hin zeigt.

## Claims

1. A portable spreader apparatus for storing and scattering granules, in particular pourable and flowable granular loose material, which contains a closable container (3) and a hand piece (2) connected to the container (3) for scattering the granules, wherein a lever (11) is pivotably held on the exterior of the hand piece (2), which is connected via a valve rod (28) to a valve head (26) of a valve (25), and the hand piece (2), in the connecting region of the container (3), comprises a lock chamber (4) for regulating the flow rate, and the hand piece (2) is shaped in the front end into a distributor (5), wherein the valve (25) is arranged in the lock chamber (4) and can be actuated via the lever (11), **characterized in that** the connection between the hand piece (2) and the container (3) occurs by way of an interlocking connection of a cylindrical sleeve (19) inserted into the hand piece (2), and the sleeve (19) is bevelled at the end situated in the hand piece (2), wherein the obliquely extending edge of the sleeve (20) forms a valve seat (23).

2. A spreader apparatus according to claim 1, **characterized in that** the hand piece (2) is composed of an upper part (12) and a bottom part (13), and the connection of the two parts (12, 13) occurs via a tongue-and-groove joint.

3. A spreader apparatus according to claim 1 or 2, **characterized in that** the lever (11) opens into an opening (29) of the lock chamber (4) of the hand piece (2) with an extension forming a valve rod (28), and the valve head (26) is integrally formed on the end of the valve rod (28).

4. A spreader apparatus according to claim 3, **characterized in that** the valve rod (28) is surrounded by rubber bellows (31), whose one end is placed over the edge (30) of the opening (29) of the lock chamber (4) and whose second end is placed over a first collar (27) arranged on the valve rod (28).

5. A spreader apparatus according to claim 4, **characterized in that** arc-shaped rails (15) are integrally attached on both sides to the upper part (12) of the hand piece (2), which rails are used for guiding the lever (11), and the lever comprises on both sides a respective integrally attached shaped part (14) with an arc-shaped slot (16) into which the rails (15) engage.

6. A spreader apparatus according to claim 5, **characterized in that** a positioning controller (17) is arranged on the hand piece (2), which enables a reproducible setting position of the lever (11).

7. A spreader apparatus according to claim 1, **characterized in that** the bottom part (13) of the hand piece (2) is shaped in the region of the distributor (5) into a deltoid-shaped base plate (52), which comprises a forwardly tapering depression (53) in the longitudinal direction, and perpendicular ribs (54) are arranged laterally adjacent to the depression (53) on the right and on the left, which ribs extend under an angle of approximately 55° +/- 10° with respect to the longitudinal axis of the hand piece (2) in the forward direction, and the ribs (54) are shorter to the front and respectively reach up to the outer edge (55) of the base plate (52).

8. A spreader apparatus according to claim 7, **characterized in that** the upper part (12) of the hand piece (2) has the same geometric shape in the region of the distributor (6) as the base plate (52) of the bottom part (13) and forms the cover of the distributor (5).

9. A spreader apparatus according to claim 1, **characterized in that** the container (3) is formed by a bag (6) and a conically shaped, flexible and dimensionally stable articulated funnel (9), wherein the bag (6) is a foil bag, and further the bag (6) is connected to the articulated funnel (9).

10. A spreader apparatus according to claim 1, **characterized in that** a fillet (24) is arranged in the sleeve (19) transversely to the longitudinal axis, wherein the fillet (24) extends parallel to the longitudinal extension of the hand piece (2).

11. A spreader apparatus according to claim 8, **characterized in that** the external dimensions of the cover of the distributor (5) are smaller than the external dimensions of the base plate (52) of the distributor (5), and the ribs (54) comprise bevelled portions (56) on their outer edges.

12. A spreader apparatus according to claim 5, **characterized in that** the slope of the valve seat (20) in relation to the longitudinal axis of the sleeve (19) is 15° +/- 10°, and the valve head (26) can be moved on a circular orbit whose centre of rotation lies far outside the lock chamber (4) and outside of the valve head (26).

13. A spreader apparatus according to claim 12, **characterized in that** the lever (11) is arranged in such a way that its open end which is remote from the valve head (26) faces the distributor (5).

## Revendications

1. Dispositif d'épandage portatif pour la conservation et l'application de granulés, en particulier de matière en vrac granuleuse fluide, comprenant un réservoir (3) qui peut être fermé et une pièce à main (2) raccordée au réservoir (3) pour l'application des granulés, dans lequel un levier (11) est retenu de façon pivotante sur l'extérieur de la pièce à main (2) et relié par une tige de soupape (28) à un disque de soupape (26) d'une soupape (25) et la pièce à main (2) présente dans la zone de raccordement du réservoir (3) une chambre de sas (4) pour réguler le débit, et la pièce à main (2) est en forme de distributeur (5) à son extrémité antérieure, la soupape (25) étant disposée dans la chambre de sas (4) et pouvant être actionnée à l'aide du levier (11), **caractérisé en ce que** la liaison entre la pièce à main (2) et le réservoir (3) est réalisée par un assemblage en correspondance de forme d'une douille cylindrique (19) insérée dans la pièce à main (2), et **en ce que** la douille (19) est biseautée à l'extrémité qui se trouve dans la pièce à main (2), le bord oblique de la douille (20) formant un siège de soupape (23).

2. Dispositif d'épandage selon la revendication 1, **caractérisé en ce que** la pièce à main (2) se compose d'une partie supérieure (12) et d'une partie inférieure (13) et **en ce que** les deux pièces (12, 13) sont assemblées par un assemblage à rainure et languette.

3. Dispositif d'épandage selon la revendication 1 ou 2, **caractérisé en ce que** le levier (11) aboutit avec une rallonge formant une tige de soupape (28) dans une ouverture (29) de la chambre de sas (4) de la pièce à main (2) et **en ce que** le disque de soupape (26) est formé à l'extrémité de la tige de soupape (28).

4. Dispositif d'épandage selon la revendication 3, **caractérisé en ce que** la tige de soupape (28) est entourée par un soufflet en caoutchouc (31) dont une extrémité est enfilée par-dessus le bord (30) de l'ouverture (29) de la chambre de sas (4) et la deuxième extrémité par-dessus un premier collet (27) disposé sur la tige de soupape (28).

5. Dispositif d'épandage selon la revendication 4, **caractérisé en ce que** des rails (15) en arc de cercle formés des deux côtés sur la partie supérieure (12) de la pièce à main (2) servent à guider le levier (11) et **en ce que** le levier (11) présente de chaque côté une partie moulée (14) avec une fente en arc de cercle (16) dans laquelle le rail (15) se met en prise.

6. Dispositif d'épandage selon la revendication 5, **caractérisé en ce qu'**il est prévu sur la pièce à main (2) un organe de réglage (17) qui permet une position de réglage reproductible du levier (11).

7. Dispositif d'épandage selon la revendication 1, **caractérisé en ce que** la partie inférieure (13) de la pièce à main (2) est mise en forme au niveau du distributeur (5) pour former une plaque de fond (52) deltoïde qui présente dans le sens longitudinal un creux (53) se resserrant vers l'avant et **en ce que** sont prévues à droite et à gauche sur les côtés du creux (53) des nervures (54) verticales qui sont dirigées vers l'avant en formant un angle d'environ 55°±10° par rapport à l'axe longitudinal de la pièce à main (2), et **en ce que** les nervures (54) sont plus courtes vers l'avant et vont chacune jusqu'au bord extérieur (55) de la plaque de fond (52).

8. Dispositif d'épandage selon la revendication 7, **caractérisé en ce que** la partie supérieure (12) de la pièce à main (2) présente au niveau du distributeur (6) la même forme géométrique que la plaque de fond (52) de la partie inférieure (13) et forme le couvercle du distributeur (5).

9. Dispositif d'épandage selon la revendication 1, **caractérisé en ce que** le réservoir (3) est formé par un sac (6) et un entonnoir articulé (9) conique, flexible et de forme stable, le sac (6) étant un sac en feuille de plastique, et **en ce que** le sac (6) est en outre relié à l'entonnoir articulé (9).

10. Dispositif d'épandage selon la revendication 1, **caractérisé en ce qu'**une barrette (24) est prévue dans la douille (19) perpendiculairement à l'axe longitudinal, laquelle barrette (24) s'étend parallèlement à l'étendue longitudinale de la pièce à main (2).

11. Dispositif d'épandage selon la revendication 8, **caractérisé en ce que** les dimensions extérieures du couvercle du distributeur (5) sont plus petites que les dimensions extérieures de la plaque de fond (52) du distributeur (5) et les nervures (54) présentent des biseaux (56) sur leurs bords extérieurs.

12. Dispositif d'épandage selon la revendication 5, **caractérisé en ce que** le biseau du siège de soupape (20) par rapport à l'axe longitudinal de la douille (19) est de 15° ±10° et le disque de soupape (26) peut être déplacé sur une trajectoire circulaire dont le centre de rotation se trouve loin à l'extérieur de la chambre de sas (4) et à l'extérieur du disque de soupape (26).

13. Dispositif d'épandage selon la revendication 12, **caractérisé en ce que** le levier (11) est disposé de telle manière que son extrémité ouverte et éloignée du disque de soupape (26) soit dirigée vers le distributeur (5).
